# EUROPEAN PATENT SPECIFICATION

(11) **EP 0 369 792 B1**
(45) Date of publication and mention of the grant of the patent: **14.07.1993**
(21) Application number: 89311887.7
(22) Date of filing: 16.11.1989
(51) Int. Cl.: A61G 5/04

(54) **Vehicle and method of installing an electrical battery in the vehicle**
Fahrzeug und Verfahren zum Aufstellen einer Batterie in einem Fahrzeug
Véhicule et procédé pour installer un accumulateur dans le véhicule

(30) Priority: 16.11.1988 GB 8826769
(43) Date of publication of application: 23.05.1990
(73) Proprietor: SUNRISE MEDICAL LIMITED, Brierley Hill West Midlands DY5 1QA (GB)
(72) Inventor: Gould, Royston Mervyn, Sandpipers, Kingswinford DY5 8XT (GB)
(74) Representative: Lewis, Samuel H.

(56) References cited:
- FR-A- 2 272 867
- FR-A- 2 455 886
- FR-A- 2 601 241
- US-A- 4 450 400

## Description

The present invention relates to a vehicle comprising a plurality of ground-engaging wheels, a body supported on the wheels, an electric motor for driving the vehicle and a battery of electrical cells for supplying electrical power to the motor. The invention has been devised primarily for use in a vehicle of the kind described which has a single seat for a user. An electrically propelled wheelchair is an example of such a vehicle.

Because the battery is a relatively heavy component of the vehicle, it is desirable to mount the battery at a fairly low level in the vehicle and so that the centre of gravity of the battery is not far outside the area of support of the vehicle, defined by the positions where the wheels contact a level floor. When the battery is positioned in this manner, access to the battery is necessarily impeded by other components of the vehicle.

In FR-A-2272867, there is disclosed a road vehicle incorporating a demountable electrical battery for propelling the vehicle. The battery has an inclined runner for cooperation with a correspondingly inclined guide on the vehicle. When the battery is to be removed from the vehicle, it is driven over a raised support for supporting the battery at substantially the same height as the battery is supported when in use in the vehicle. The battery is then released from the vehicle and the vehicle is moved forwards, leaving the battery on the support. As the vehicle is relieved of the weight of the battery, the vehicle body is raised by the vehicle suspension, the guide means of the vehicle rising with the vehicle body, as it is moved forwards relative to the battery. During remounting of the battery in the vehicle, the vehicle body and the guide means will be driven downwards as the weight of the battery is imposed on the guide means.

In FR-A-2601241, there is disclosed a wheelchair having a battery for driving the chair. The battery is carried in a carrier which can slide from a position beneath the seat of the wheelchair to a position in which it projects forwards beyond the seat and at a level below that of the seat. In this way, access can be gained to the battery in the carrier. A footrest of the wheelchair moves forwards with the battery carrier and can rest on the ground to prevent the wheelchair tipping forwards, when the battery carrier occupies its forwards position. In order to remove the battery from the wheelchair, it is necessary to lift the battery from the carrier.

According to a first aspect of the present invention, a vehicle of the kind described comprises a carrier for the battery and guide means for guiding the battery carrier for movement relative to the body of the vehicle along a path which extends in a direction substantially perpendicular to the axis of rotation of the driven wheels, which has a length substantially exceeding the corresponding dimension of the battery, and is characterised in that the carrier demountable from the vehicle and is engageable with the guide means while the vehicle wheels and the battery carrier rest on a flat floor.

The invention facilitates mounting of the battery in the vehicle without it being necessary to lift the battery into a carrier which is supported by other parts of the vehicle in a position above the floor. Furthermore, the invention does not require the provision of specially formed stations for supporting the demounted battery. The battery and battery carrier can be removed from the vehicle on any level floor and the vehicle can then be moved away from the battery or the battery can be moved away from the vehicle.

The carrier and the body of the vehicle preferably have respective parts of a two-part electrical connector, which parts co-operate whenever the battery is in the normal position to connect the battery with electrical circuits on the body of the vehicle, the connector parts being arranged so that they necessarily cease to connect the battery with the circuits on the vehicle body whenever the battery moves out of the normal position. This ensures that driving of the vehicle from the battery ceases if the battery is displaced significantly from its normal position. If the vehicle is provided with brakes which are applied by springs and released by electrically energised devices, then the brakes will be automatically applied.

According to a second aspect of the invention, there is provided a method of installing an electrical battery in a vehicle wherein a battery is placed in a carrier, the carrier is rolled along the floor to the vehicle, the carrier is engaged with guide means of the vehicle and the carrier is moved along a path defined by the guide means into the vehicle, the path extending upwardly so that the battery is raised as it is moved along the path.

An example of a vehicle embodying the first aspect of the invention and which is used in a method according to the second aspect will now he described, with reference to the accompanying drawings, wherein:-
FIGURE 1 shows a diagrammatic representation of the vehicle,

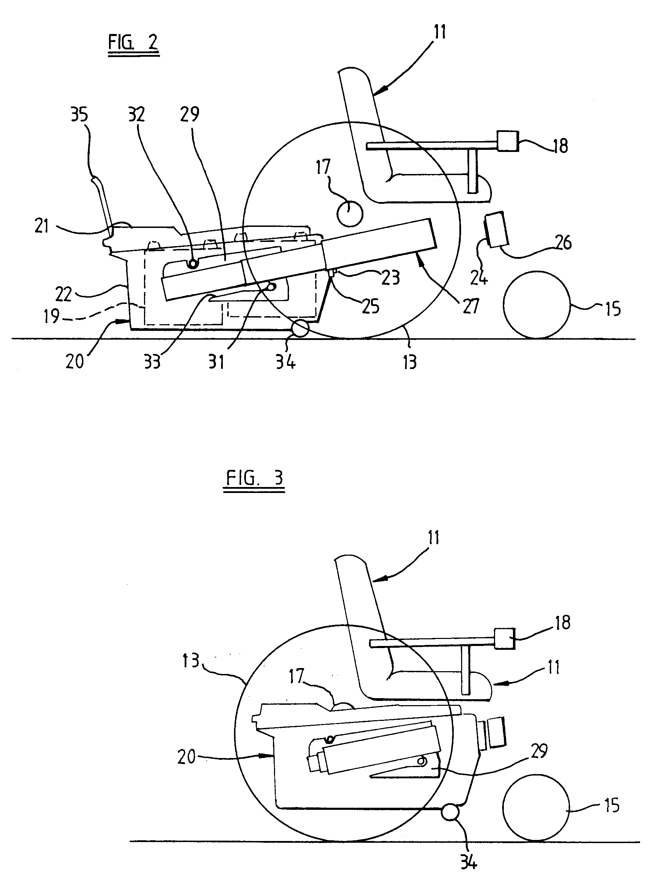

FIGURE 2 illustrates a battery carrier, guide means and adjacent parts of the vehicle during engagement of the carrier with the guide means, the guide means being extended, and;
FIGURE 3 illustrates the carrier and the guide means with the guide means retracted.

The vehicle illustrated in the accompanying drawings comprises a frame 10 on which there is mounted a single seat 11 for a user of the vehicle. The seat may be demountable and provision may be made in a known manner for adjustment of the attitude and position of the seat with respect to the frame. Footrests also may be provided on the frame. The frame constitutes the body hereinbefore referred to.

The frame is supported from the ground by a number of wheels. In the example illustrated, there are four ground-engaging wheels identified by the reference numbers 12 to 15. The wheels 12 and 13 are co-axial and can be driven by respective electric motors 16, 17. The wheels 14 and 15 are incorporated in castors or are otherwise steerable wheels. Arrangements for mounting and steering the wheels of a wheelchair are well known and will not be described or illustrated in detail. There may be substituted for the pair of steerable wheels 14 and 15 a single steerable wheel, arranged in a known manner.

The motors 16 and 17 incorporate electro-magnetically released brakes which are applied by springs to restrain rotation of the wheels 12 and 13 except when electrical power is applied to the motors 16 and 17 under the control of control means 18. The control means may be mounted in various positions, for example on or adjacent to one arm rest, on a handlebar or other central steering control or in a convenient position for operation by a pedestrian. It will be understood that means may be provided for transmitting steering movements from the user to the wheels 14 and 15 or these wheels may be arranged as castor wheels, steering of the vehicle being achieved by differential driving of the wheels 12 and 13.

Power for driving the motors 16 and 17 is provided by a battery 19 of electrical cells. The battery is contained in a carrier 20 which includes a removable lid 21 and open-topped container 22. The cells may be arranged in two groups, each group of cells being in a respective case.

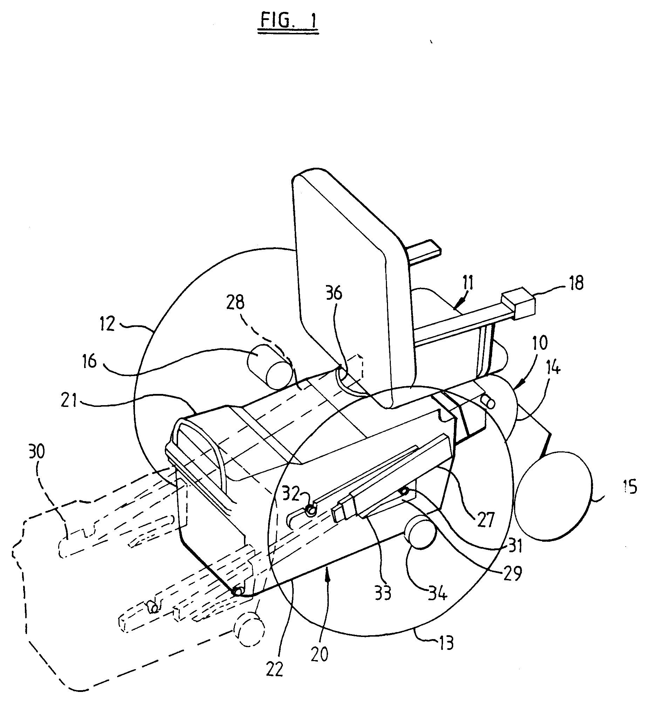

On the container 22, there is provided a first part 23 of a two-part electrical connector. The second part of this connector is mounted on the frame 10. Terminals of the connector part 23 are connected by suitable leads with terminals of the battery 19 and terminals of the connector parts 24 are connected by suitable leads in the electrical circuits of the vehicle, which include the motors 16 and 17 and the control means 18. When the battery is in its first position, illustrated by full lines in Figure 1, the connector 23, 24 necessarily connects the battery electrically with circuits of the vehicle. When the battery is moved substantially from the first position, the connector parts 23 and 24 are separated so that the battery is automatically disconnected from the circuits of the vehicle, the motors 16 and 17 are de-energised and the brakes are applied.

The connector part 23 is mounted on a support 25 which is mounted on the container 22 with limited freedom for movement of the support relative to the container laterally and vertically. The connector part 24 is mounted on a similar support 26 which, in turn, is mounted on the frame 10 for limited movement relative thereto laterally and vertically. The supports 25 and 26 are provided with complementary locating formations which co-operate as the connector part 23 is moved towards the connector part 24 to establish alignment of the connector parts with each other. Typically, the locating formations comprise one or more pins on one of the supports and complementary sockets on the other support, either the pins or the sockets or both being tapered to accommodate the initial misalignment. It will be understood that one of the supports 25 and 26 may be fixed so that all movement necessary to achieve proper alignment is undertaken by the other support. Alternatively, one of the supports may be movable laterally only and the other of the supports may be movable vertically only. Freedom for limited movement of she support 25 relative to the container 22 may be achieved by the provision of pin and slot connections between these components.

The vehicle further comprises guide means for guiding the battery 19 and carrier 20 for movement relative to the frame 10 along a path which extends at right angles to the axis of the driven wheels 12 and 13 in a direction which is generally a fore and aft direction. However, the path defined by the guide means also includes a vertical component so that, as the carrier 20 is moved from its first position illustrated in Figure 1 by full lines, it descends. When the carrier is in a second position at the limit of the travel provided by the guide means, the carrier is either at or is close to floor level.

The guide means comprises a pair of telescopic slides 27 and 28 of known construction. One component of each slide is rigidly secured to the frame 10. A further component of the slide 27 is rigidly secured to a bracket 29 and the corresponding component of the slide 28 is rigidly secured to a bracket 30. The battery carrier 20 has support means for co-operation with the brackets 29 and 30 to support the carrier from the slides. In the example illustrated, the support means comprises front and rear pins 31 and 32 projecting from the carrier 20 at one side thereof for co-operation with the bracket 29 and corresponding pins (not shown) projecting from the opposite side of the carrier for co-operation with the bracket 30. The bracket 29 has adjacent to its rear end an upwardly open slot for receiving the rear pin 32. Towards the front of the bracket, there is a rearwardly open slot for receiving the pin 31. These pins project horizontally from the battery carrier and may bear rolling elements to reduce friction with the bracket. The bracket 29 has a curved or inclined ramp 33 leading upwardly into the slot for receiving the pin 31. That part of the slot which is spaced from the ramp may be horizontal. The bracket 30 is provided with corresponding slots for receiving the pins at the other side of the battery carrier. When the pins are seated in their respective slots, the bottom of the battery carrier is horizontal.

The battery carrier 20 is provided with running means for running on the floor. Preferably, the running means comprises one or more rolling elements and the running means illustrated in the accompanying drawings comprises a pair of wheels 34 mounted one adjacent to each of the front, lower corners of the battery carrier. A handle 35 is provided on the battery carrier at the end thereof remote from the wheels 34.

The slides 27 and 28 incorporate latches of known construction for holding the slides in a retracted condition. A common handle 36 is provided for releasing these latches, the handle 36 being connected with the latches by a suitable linkage.

When the battery 19 and carrier 20 are in the first position, the centre of gravity of the battery lies somewhat below and slightly forwardly of the axis of rotation of the driven wheels 12 and 13. The battery lies partly beneath the seat 11 and partly to the rear of the seat. The battery lies between the driven wheels and beneath the motors 16 and 17 so that access to the battery carrier is severely restricted. It may be impossible to remove the lid 21 from the container 22 whilst the battery carrier is in the first position.

When the latches are released and the slides 27 and 28 are extended, the battery 19 and carrier 20 are moved relative to the frame 10 in a direction away from the steerable wheels 14 and 15 to the second position illustrated by a broken line in Figure 1. In this position, the battery is spaced rearwardly from the vertical plane containing the axis of rotation of the driven wheels 12 and 13 and is spaced rearwardly from the seat 11. Although, when in the second position, the carrier 20 may lie partly between the driven wheels, access to the lid 21 is not severely restricted and the lid can be removed. Access can be gained to the battery for checking of electrolyte level or for checking the connections with the terminals of the battery.

If better access is required to the battery or replacement of the battery is required, the carrier 20 can readily be dismounted from the slides 27 and 28 by raising the rear end of the carrier sufficiently to lift the pin 32 out of its slot in the bracket 29. During such lifting of the rear end of the carrier, the carrier rocks on the front pin 31 so that the wheels 34 move downwardly into firm engagement with the ground and partly support the weight of the battery and carrier. The carrier can then be drawn rearwardly from the remainder of the vehicle, the wheels 34 rolling on the floor.

When the carrier 20 is to be returned to the vehicle, it is rolled on its wheels 34 up to the vehicle so that the pin 31 approaches the ramp 33 and the pin 32 approaches the end of the bracket 29. The rear end of the carrier is then raised whilst the wheels 34 remain in contact with the floor. Accordingly, both the pin 31 and the pin 32 are raised. The pin 32 is raised sufficiently to pass over the top of the bracket into its slot and the pin 31 is raised sufficiently to travel across the ramp 33 into its slot. Once the pin 32 has been engaged in its slot, the carrier can be pushed forwardly to retract the slides 27 and 28 and it is no longer necessary for a person to support the weight of the battery and carrier.

It will be noted that the length of the path of travel of the carrier 20, whilst engaged with the guide means of the vehicle, is approximately equal to twice the length of the carrier. The vertical component of movement of the carrier along this path is considerably less than twice the length of the carrier and is preferably less than one third of the length of the path. The length of the path preferably exceeds the radius of the driven wheels 12 and 13 but may be less than the diameter of those wheels.

It will be appreciated that the end of the vehicle at which the battery and carrier can be withdrawn is designated the rear of the vehicle because the seat 11 faces away from that end of the vehicle. If the seat is mounted to face in the opposite direction, then the end of the vehicle at which the battery and carrier can be withdrawn would be designated the front of the vehicle. The vehicle may be arranged for withdrawal of the battery at either the front or the rear. In the particular example illustrated, the driven wheels are rear wheels but the driven wheels may alternatively be front wheels. Whilst we prefer to provide two motors for driving respective ones of the driven wheels, it would be within the scope of the invention to transmit drive from a single motor to both of the driven wheels, possibly through clutches or through a differential drive train.

The features disclosed in the foregoing description, or the following claims, or the accompanying drawings, expressed in their specific forms or in terms of a means for performing the disclosed function, or a method or process for attaining the disclosed result, as appropriate, may, separately or in any combination of such features, be utilised for realising the invention in diverse forms thereof.

## Claims

1. A vehicle comprising a plurality of ground-engaging wheels (12-15), two of these being driven wheels (12,13), a body (10) supported on the wheels, an electric motor (16) for driving the vehicle and a battery (19) of electrical cells for supplying electrical power to the motor, a carrier (20) for the battery and guide means (27, 28) for guiding the battery carrier for movement relative to the body along a path with extends in a direction substantially perpendicular to the axis of rotation of the driven wheels (12,13) and which has a length substantially exceeding the corresponding dimension of the battery, characterised in that the battery carrier is demountable from the vehicle and is engageable with the guide means while the vehicle wheels and the battery carrier rest on a flat floor.

2. A vehicle according to Claim 1 wherein said wheels include a pair of co-axial driven wheels (12,13) said path extends from a first position to a second position, when the battery carrier (20) is in the first position, the battery (19) carried thereby lies generally between the driven wheels and across a vertical plane containing the axis of the driven wheels and wherein, when the battery carrier is in the second position, the battery is spaced from said vertical plane.

3. A vehicle according to Claim 1 wherein said wheels include a pair of co-axial driven wheels (12, 13) and at least one further wheel (14) spaced from the axis of the driven wheels in a first direction, said path extends from a first position to a second position and wherein, when the battery carrier (20) is in the second position, the battery (19) carried thereby is spaced in a direction opposite to the first direction from a vertical plane containing the axis of the driven wheels.

4. A vehicle according to Claim 2 or Claim 3 wherein the battery carrier (20) has running means (34) for engaging the floor when the carrier is demounted from the body onto the floor, wherein, when said wheels (12-15) rest on a horizontal floor, the path defined by the guide means extends upwardly from the second position towards the first position and wherein, when the battery carrier is in the first position, the running means (34) is spaced upwardly from the floor.

5. A vehicle according to Claim 4 wherein the running means (34) is at one end of the carrier (20) and the carrier has support means (31, 32) spaced from said one end for cooperation with the guide means (27, 28) to support the carrier from the guide means.

6. A vehicle according to any preceding claim wherein the guide means includes a latch for latching the carrier in the first position.

7. A vehicle according to any one of Claims 2 to 6 wherein the carrier (20) and the body (10) have respective parts of a two-part electrical connector (23, 24) which cooperate when the battery is in the first position to connect the battery electrically with circuits on the body and wherein said connector necessarily ceases to connect the battery electrically with the circuits on the body whenever the battery moves out of the first position towards the second position.

8. A vehicle according to Claim 7 wherein said connector parts (23, 24) are mounted on respective supports (23, 26) said supports have mutually cooperating location formations and wherein at least one of the supports is arranged for limited displacement relative to the battery carrier or to the body, as the case may be, to permit mutual alignment of the supports by the action of the location formations as the battery is moved into its first position.

9. A method of installing an electrical battery (19) in a vehicle wherein the battery is placed in a carrier (20), the carrier is rolled along the floor to the vehicle, the carrier is engaged with guide means (27, 28) on the vehicle and the carrier is moved along a path defined by the guide means into the vehicle, the path extending upwardly so that the battery is raised as it moves along the path.

## Patentansprüche

1. Ein Fahrzeug mit einer Mehrzahl von den Boden berührenden Rädern (12-15), von denen zwei angetriebene Räder (12, 13) sind, einem auf den Rädern abgestützten Körper (10), einem Elektromotor (16) zum Antreiben des Fahrzeugs und einer Batterie (19) von elektrischen Zellen zum Versorgen des Motors mit elektrischer Energie, einem Träger (20) für die Batterie und Führungsmittel (27, 28) zum Führen des Batterieträgers für eine Bewegung relativ zu dem Körper entlang eines Weges, der sich in eine Richtung im wesentlichen senkrecht zu der Drehachse der angetriebenen Räder (12, 13) erstreckt und der eine Länge hat, die erheblich die entsprechende Erstreckung der Batterie überschreitet, dadurch gekennzeichnet daß der Batterieträger von dem Fahrzeug abnehmbar ist und mit den Führungsmitteln in Eingriff ist, während die Fahrzeugräder und der Batterieträger auf einem flachen Boden ruhen.

2. Fahrzeug nach Anspruch 1, wobei die Räder ein Paar von koaxial angetriebenen Rädern (12, 13) aufweisen, deren Weg sich von einer ersten Position zu einer zweiten Position erstreckt, wenn der Batterieträger (20) in der ersten Position ist, wobei die dadurch getragene Batterie (19) im wesentlichen zwischen den Antriebsrädern und über einer vertikalen Achse, die die Achse der angetriebenen Räder beinhaltet, liegt, und wobei dann, wenn der Batterieträger in der zweiten Position ist, die Batterie von der vertikalen Ebene beabstandet ist.

3. Fahrzeug nach Anspruch 1, wobei die Räder ein Paar von koaxial angetriebenen Rädern (12, 13) aufweisen und weinigstens ein weiteres Rad (14) mit Abstand von der Achse der angetriebenen Räder in einer ersten Richtung angeordnet ist, wobei sich der Weg von einer ersten Position zu einer zweiten Position erstreckt und wobei dann, wenn der Batterieträger (20) in der zweiten Position ist, die dadurch getragene Batterie (19) in einer der ersten Richtung gegenüber-liegenden Richtung von einer die Achse der angetriebenen Räder beinhaltenden vertikalen Ebene beabstandet ist.

4. Fahrzeug nach Anspruch 2 oder 3, wobei der Batterieträger (20) Laufmittel (34) zum Berühren des Bodens, dann, wenn der Träger von dem Körper auf dem Boden abgesetzt ist, hat, wobei dann, wenn die Räder (12-15) auf einem horizontalen Boden ruhen, der von dem Führungsmittel definierte Weg sich von der zweiten Position in die erste Position nach oben erstreckt und wobei dann, wenn der Batterieträger in der ersten Position ist, das Laufmittel (34) von dem Boden nach oben beabstandet ist.

5. Fahrzeug nach Anspruch 4, wobei das Laufmittel (34) an dem einen Ende des Trägers (20) ist und der Träger Stützmittel (31, 32) hat, die von dem einen Ende zum Zusammenwirken mit den Führungsmitteln (27, 28) beabstandet sind, um den Träger von dem Führungsmittel zu stützen.

6. Fahrzeug nach einem der vorangehenden Ansprüche, wobei das Führungsmittel eine Verriegelung zum Verriegeln des Trägers in der ersten Position aufweist.

7. Fahrzeug nach einem des Ansprüche 2 bis 6, wobei der Träger (20) und der Körper (10) jeweils Teile eines zweiteiligen elektrischen Verbinders (23, 24) haben, die zusammenwirken, wenn die Batterie in der ersten Position ist, um die Batterie elektrisch mit Schaltkreisen auf dem Körper zu verbinden und wobei der Verbinder notwendigerweise die elektrische Verbindung der Batterie mit den Schaltkreisen auf dem Körper immer dann unterbricht, wenn die Batterie sich aus der ersten Position in Richtung auf die zweite Position bewegt.

8. Fahrzeug nach Anspruch 7, wobei die Verbinderteile (23, 24) auf jeweiligen Stützen (23, 26) montiert sind, wobei die Stützen gegenseitig zusammenwirkende Lokalisierungsausbildungen haben und wobei wenigstens eine der Stützen angeordnet ist für eine begrenzte Verlagerung relativ zu dem Batterieträger oder zu dem Körper, wie es der Fall sein kann, um eine gegenseitige Ausrichtung der Stützen durch die Wirkung der Lokalisierungsanordnungen zu erlauben, wenn die Batterie in ihre erste Position bewegt wird.

9. Verfahren zum Installieren einer elektrischen Batterie (19) in einem Fahrzeug, wobei die Batterie in einem Träger (20) angeordnet ist, der Träger entlang dem Boden zu dem Fahrzeug gerollt wird, der Träger von Führungsmitteln (27, 28) auf dem Fahrzeug in Eingriff gebracht wird und der Träger entlang eines Wegs, der von den Führungsmitteln definiert wird, in das Fahrzeug bewegt wird, wobei sich der Weg nach oben erstreckt, so daß die Batterie bei ihrer Bewegung entlang des Wegs angehoben wird.

## Revendications

1. Véhicule comportant plusieurs roues (12-15) destinées à être au contact du sol, deux des roues étant des roues menées (12, 13), un châssis (10) supporté par les roues, un moteur électrique (16) destiné à entraîner le véhicule, et une batterie (19) d'accumulateurs électriques destinée à transmettre de l'énergie électrique au moteur, un support (20) de batterie et un dispositif (27, 28) de guidage du support de batterie afin que ce support se déplace par rapport au châssis suivant un trajet dont la direction est sensiblement perpendiculaire à l'axe de rotation des roues menées (12, 13) et dont la longueur dépasse nettement la dimension correspondante de la batterie, caractérisé en ce que le support de batterie peut être démonté du véhicule et est destiné à coopérer avec le dispositif de guidage lorsque les roues du véhicule et le support de batterie sont en appui sur un sol plat.

2. Véhicule selon la revendication 1, dans lequel les roues comportent deux roues menées coaxiales (12, 13), le trajet est disposé d'une première position à une seconde position, et, lorsque le support (20) de batterie est dans la première position, la batterie (19) portée par le support est placée de façon générale entre les roues menées et transversalement à un plan vertical contenant l'axe des roues menées, et, lorsque le support de batterie est dans la seconde position, la batterie se trouve à distance du plan vertical.

3. Véhicule selon la revendication 1, dans lequel les roues comprennent deux roues coaxiales menées (12, 13) et au moins une roue supplémentaire (14) placée à distance de l'axe des roues menées dans un premier sens, le trajet est compris entre une première position et une seconde position et, lorsque le support de batterie (20) est dans la seconde position, la batterie (19) contenue dans le support est placée à une certaine distance du plan vertical contenant l'axe des roues menées dans le sens opposé au premier sens.

4. Véhicule selon la revendication 2 ou 3, dans lequel le support (20) de batterie possède un dispositif (34) de déplacement destiné à être au contact du sol lorsque le support est démonté du châssis et placé sur le sol, et dans lequel, lorsque les roues (12-15) sont en appui sur un sol horizontal, le trajet délimité par le dispositif de guidage est dirigé vers le haut de la seconde position vers la première position et, lorsque le support de batterie est dans la première position, le dispositif de déplacement (34) est placé à distance au-dessus du sol.

5. Véhicule selon la revendication 4, dans lequel le dispositif de déplacement (34) est placé à une première extrémité du support (20), et le support possède un dispositif (31, 32) d'appui placé à distance de la première extrémité et destiné à coopérer avec le dispositif de guidage (27, 28) pour le maintien du support à partir du dispositif de guidage.

6. Véhicule selon l'une quelconque des revendications précédentes, dans lequel le dispositif de guidage comporte un verrou destiné à verrouiller le support dans la première position.

7. Véhicule selon l'une quelconque de revendications 2 à 6, dans lequel le support (20) et le châssis (10) ont des parties respectives d'un connecteur électrique (23, 24) en deux parties qui coopèrent lorsque la batterie est dans la première position afin que la batterie soit raccordée électriquement à des circuits du châssis, et dans lequel le connecteur cesse obligatoirement de connecter la batterie électriquement aux circuits placés sur le châssis chaque fois que la batterie quitte la première position vers la seconde position.

8. Véhicule selon la revendication 7, dans lequel les parties (23, 24) de connecteur sont montées sur des supports respectifs (23, 26) qui ont des organes conformés de positionnement destinés à coopérer, et l'un au moins de ces supports est destiné à se déplacer sur une distance limitée par rapport au support de batterie ou au châssis, selon le cas, afin qu'il permette un alignement mutuel des supports grâce aux organes conformés de positionnement lorsque la batterie est mise à la première position.

9. Procédé d'installation d'une batterie électrique (19) dans un véhicule, dans lequel la batterie est placée dans un support (20), le support est roulé le long du sol vers le véhicule, le support est mis au contact d'un dispositif de guidage (27, 28) placé sur le véhicule, et le support est déplacé le long d'un trajet délimité par le dispositif de guidage à l'intérieur du véhicule, le trajet remontant afin que la batterie soit soulevée lorsqu'elle se déplace le long de ce trajet.
